# EUROPEAN PATENT SPECIFICATION

(11) **EP 3 998 412 B1**
(45) Date of publication and mention of the grant of the patent: **22.02.2023**
(21) Application number: 21204721.1
(22) Date of filing: 26.10.2021
(51) Int. Cl.: F16D 13/54, F16D 13/70, F16D 13/72, F16D 13/74, F16D 25/0638, F16D 13/56, F16D 23/12

(54) **CLUTCH DEVICE AND STRADDLED VEHICLE INCLUDING CLUTCH DEVICE**
KUPPLUNGSVORRICHTUNG UND GRÄTSCHSITZFAHRZEUG MIT KUPPLUNGSVORRICHTUNG
DISPOSITIF D'EMBRAYAGE ET VÉHICULE À ENFOURCHER COMPRENANT UN DISPOSITIF D'EMBRAYAGE

(30) Priority: 30.10.2020 JP 2020182457
(43) Date of publication of application: 18.05.2022
(73) Proprietor: Yamaha Hatsudoki Kabushiki Kaisha, Iwata-shi, Shizuoka 438-8501 (JP)
(72) Inventor: Takeda, Norihiro, Iwata-shi (JP); Hiyoshi, Kenji, Iwata-shi (JP)
(74) Representative: Grünecker Patent- und Rechtsanwälte PartG mbB

(56) References cited:
- EP-A1- 3 633 220
- CN-U- 207 554 626
- JP-B2- 6 725 569

## Description

The present invention relates to a clutch device and a straddled vehicle including the clutch device.

In a straddled vehicle such as a motorcycle, a clutch device for changing a transmission state of a rotational force between an engine and wheels is used. A clutch device described in JP 6725569 B has an assist cam mechanism and a slipper cam mechanism. A clutch center and a pressure plate are provided to be rotatable relative to each other. The assist cam mechanism includes a pair of cam surfaces that abut against each other when a drive force (positive torque) of an engine is exerted on the clutch center and the pressure plate. When the pair of cam surfaces of the assist cam mechanism abuts against each other, a force that brings the pressure plate close to the clutch center is exerted on the pressure plate, and an engaging force exerted between a plurality of friction plates and a plurality of clutch plates is enhanced.

The slipper cam mechanism includes a pair of cam surfaces that abuts against each other when a reverse drive force (negative torque) is exerted on the clutch center and the pressure plate from a transmission. When the pair of cam surfaces of the slipper cam mechanism abuts against each other, a force that causes the pressure plate to move away from the clutch center is exerted on the pressure plate, and an engaging force exerted between the plurality of plates and the plurality of clutch plates is weakened.

With the clutch device having the above-mentioned configuration, a clunking noise may be generated repeatedly and successively depending on a state of a vehicle including the clutch device. It has been discovered a mechanism for generation of a clunking noise, described below, as a result of consideration in regard to the cause of repetitive and successive generation of a clunking noise.

With a torque not applied to the clutch center, when the rotational speed of the clutch center is higher than the rotational speed of the pressure plate, the pair of cam surfaces of the assist cam mechanism can be separated from each other. With the pair of cam surfaces separable from each other, when a difference in rotational speed between the clutch center and the pressure plate changes, the pair of cam surfaces of the assist cam mechanism abuts against each other and separates from each other, repeatedly. Thus, a clunking noise is generated repeatedly.

It has been considered that the rotational speed of the pressure plate needs to be equal to or larger than the rotational speed of the clutch center in order to suppress repetitive generation of a clunking noise on the basis of the above-mentioned mechanism for generation of a clunking noise.

An object of the present invention is to provide a clutch device that suppresses a rotational speed of a clutch boss being higher than a rotational speed of a pressure member, and a straddled vehicle including the clutch device.

According to the present invention said object is solved by clutch device having the features of independent claim 1. Preferred embodiments are laid down in the dependent claims.
(1) A clutch device according to one aspect of the present teaching includes a clutch housing provided to be rotatable about an axis extending in one direction, a clutch boss that has a boss portion surrounding the axis and having an inner peripheral surface and a first outer peripheral surface, and an annular pressure-receiving surface that projects outwardly from the boss portion, and is provided in the clutch housing to be rotatable about the axis, a pressure member that has a fitting portion being fitted into the boss portion and having a second outer peripheral surface, and an annular pressure surface opposite to the pressure-receiving surface, and is configured to be movable in an axial direction, which is the one direction, relative to the clutch boss and rotatable relative to the clutch boss, a plurality of friction plates provided between the pressure-receiving surface and the pressure surface, and an oil supplier that supplies oil into the boss portion, wherein the clutch boss and the pressure member respectively have a first cam surface and a second cam surface that are abuttable against each other and separable from each other by relative rotation between the clutch boss and the pressure member, a first concave portion that guides oil from the oil supplier to a tip of the boss portion is formed at the inner peripheral surface of the boss portion, a second concave portion that guides oil from the oil supplier to the pressure surface is formed at the second outer peripheral surface of the pressure member to be at least partially opposite to the first concave portion, and a third concave portion that guides oil guided by the first concave portion and the second concave portion to at least one friction plate including a friction plate located closest to the pressing surface is formed at the pressure surface.

In the clutch device, in the semi-clutch state in which the clutch housing is rotated, the clutch boss is rotated by a drag torque exerted on the plurality of friction plates. Thus, the rotational speed of the clutch boss attempts to be higher than the rotational speed of the pressure member. With the above-mentioned configuration, the cross section of an oil flow path formed of the first concave portion and the second concave portion is sufficiently larger than the cross section of the oil flow path constituted by either one of the first concave portion and the second concave portion. Therefore, a large amount of oil flowing through the oil flow path formed of the first concave portion and the second concave portion is smoothly guided to the tip of the boss portion. Further, a large amount of oil guided to the tip of the boss portion is smoothly supplied to at least one friction plate from the third concave portion of the pressure surface of the pressure member. Thus, at least one friction plate, located between the tip of the boss portion of the clutch boss and the pressure surface of the pressure member, out of the plurality of friction plates is moistened. In this case, a drag torque of the friction plate with respect to the pressure surface of the pressure member is increased. As a result, the pressure member, the clutch boss and the friction plate are rotated.

In this manner, the rotational speed of the clutch boss being higher than the rotational speed of the pressure member is suppressed. Thus, the first cam surface and the second cam surface are kept abutting against each other. Therefore, the first and second cam surfaces are prevented from abutting against each other and separating from each other, repeatedly, and successive and repetitive generation of a clunking noise is suppressed.

(2) The plurality of friction plates may include a plurality of first friction plates and a plurality of second friction plates that are alternately provided to be movable in the axial direction between the pressure-receiving surface and the pressure surface, the plurality of first friction plates may be provided to be non-rotatable relative to the clutch housing, a plurality of second friction plates out of the plurality of second friction plates may be provided to be non-rotatable relative to the boss portion, one remaining second friction plate or a plurality of remaining second friction plates out of the plurality of second friction plates may be provided to be non-rotatable relative to the fitting portion, and the first concave portion, the second concave portion and the third concave portion may be configured to guide oil from the oil supplier to at least one first friction plate, including a friction plate located closest to the pressure surface, out of the plurality of first friction plates.

In this case, the oil guided to the third concave portion of the pressure surface of the pressure member is supplied to at least one first friction plate including the friction plate located closest to the pressure surface, and the first friction plate is moistened. Thus, a drag torque of at least one first friction plate with respect to one or a plurality of second friction plates that are rotated together with the fitting portion of the pressure member is increased. Thus, the pressure member is rotated together with the clutch boss. As a result, the rotational speed of the clutch boss being higher than the rotational speed of the pressure member is sufficiently suppressed.

(3) A plurality of teeth may be provided in a region except for a portion located outwardly of the third concave portion of the pressure surface of the pressure member, and the plurality of second friction plates may be engaged with the plurality of teeth to be non-rotatable relative to the pressure member.

In this case, the oil guided by the first, second and third concave portions is smoothly guided to one or a plurality of first friction plates that come into contact with the one or plurality of second friction plates that are rotated together with the pressure member without being interfered by the plurality of teeth.

(4) A drag torque of a first friction plate located closest to the pressure surface of the pressure member out of the plurality of first friction plates may be larger than a drag torque of a first friction plate located closest to the pressure-receiving surface of the clutch boss. Thus, the rotational speed of the clutch boss being higher than the rotational speed of the pressure member is suppressed.

(5) One or a plurality of through holes that penetrate from the inner peripheral surface to the first outer peripheral surface of the boss portion may be formed in the first concave portion. Thus, with a simple configuration, oil can be smoothly guided to the plurality of friction plates.

(6) A straddled vehicle according to another aspect of the present teaching includes a drive wheel, the above-mentioned clutch device, an engine that supplies a rotational force to the clutch housing of the clutch device, and a transmission that transmits a rotational force of the clutch boss of the clutch device to the drive wheel.

The straddled vehicle includes the above-mentioned clutch device. Therefore, because the rotational speed of the clutch boss being higher than the rotational speed of the pressure member is suppressed, successive and repetitive generation of a clunking noise is suppressed.

Other features, elements, characteristics, and advantages of the present disclosure will become more apparent from the following description of preferred embodiments of the present disclosure with reference to the attached drawings.

### BRIEF DESCRIPTION OF THE DRAWING

Fig. 1 is a right side view of a motorcycle according to one embodiment;
Fig. 2 is an exploded perspective view for explaining the basic configuration of a clutch device of Fig. 1;
Fig. 3 is a cross sectional view of the clutch device of Fig. 1 cut along a plane including a rotational axis;
Fig. 4 is a plan view of a clutch boss as viewed in a second axial direction;
Fig. 5 is a plan view of the clutch boss as viewed in a first axial direction;
Fig. 6 is an external perspective view of the clutch boss;
Fig. 7 is a plan view of a pressure plate as viewed in the second axial direction;
Fig. 8 is a plan view of the pressure plate as viewed in the first axial direction;
Fig. 9 is an external perspective view of the pressure plate;
Fig. 10 is a diagram for explaining the positional relationship between a plurality of first concave portions of the clutch boss and a plurality of second concave portions of the pressure plate in a case where the pressure plate is attached to the clutch boss;
Fig. 11 is an external perspective view showing the pressure plate being attached to the clutch boss; and
Fig. 12 is a schematic cross sectional view for explaining a flow of oil in a first concave portion, a second concave portion, a third concave portion and two through holes of Fig. 11.

### DETAILED DESCRIPTION

A clutch device and a straddled vehicle including the clutch device according to one embodiment will be described below with reference to the drawings. A motorcycle will be explained as one example of the straddled vehicle.

### [1] Schematic Configuration of Motorcycle

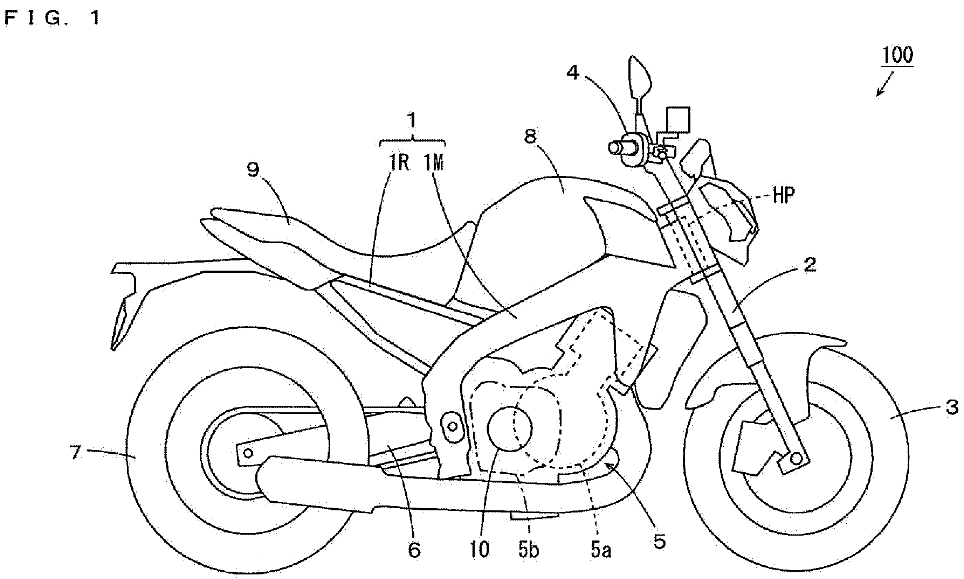

Fig. 1 is a right side view of the motorcycle according to the one embodiment. In Fig. 1, the motorcycle 100 standing up to be perpendicular to the road surface is shown. The motorcycle 100 of Fig. 1 includes a metallic body frame 1. The body frame 1 includes a main frame 1M and a rear frame 1R. The front end of the main frame 1M constitutes a head pipe HP. The main frame 1M is formed to extend rearwardly and downwardly from the head pipe HP. The rear frame 1R is attached to the main frame 1M so as to extend rearwardly and slightly upwardly from the rear end portion of the main frame 1M and its vicinity.

A front fork 2 is provided at the head pipe HP to be swingable in a left-and-right direction. A front wheel 3 is rotatably supported at the lower end of the front fork 2. A handle 4 is provided at the upper end of the front fork 2.

The main frame 1M supports an engine unit 5 at a position farther downward than the head pipe HP. A fuel tank 8 is provided to be located upwardly of the engine unit 5 and rearwardly of the head pipe HP. A seat 9 is provided rearwardly of the fuel tank 8. The fuel tank 8 is mainly supported by the main frame 1M, and the seat 9 is mainly supported by the rear frame 1R.

A rear arm 6 is provided to extend rearwardly from a lower portion at the rear end of the main frame 1M. The rear arm 6 is supported at the main frame 1M via a pivot shaft. A rear wheel 7 is rotatably supported at the rear end of the rear arm 6. The rear wheel 7 is rotated as a drive wheel by motive power generated by the engine unit 5.

The engine unit 5 includes an engine 5a, a transmission 5b and the clutch device 10. The transmission 5b includes a main shaft (an input shaft) and a drive shaft (an output shaft). The transmission 5b transmits a torque, transmitted to the main shaft via the clutch device 10 from the engine 5a, to the rear wheel 7 via the drive shaft at a transmission gear ratio out of a plurality of predetermined transmission gear ratios. The clutch device 10 adjusts the magnitude of a torque transmitted between the engine 5a and the transmission 5b in accordance with an operating state of a clutch lever (not shown) provided at the handle 4 of Fig. 1. Details of the clutch device 10 will be described below.

### [2] Basic Configuration of Clutch Device 10

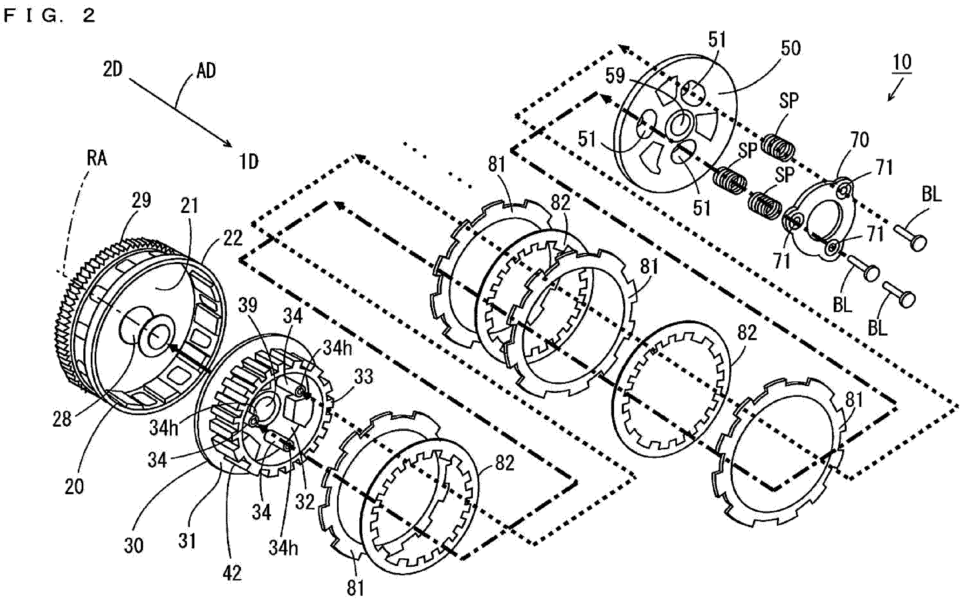

Fig. 2 is an exploded perspective view for explaining the basic configuration of the clutch device 10 of Fig. 1. The basic configuration of the clutch device 10 will be described below together with the assembly procedure of the clutch device 10 with reference to Fig. 2. As shown in Fig. 2, the clutch device 10 is mainly constituted by a clutch housing 20, an input gear 29, a clutch boss 30, a pressure plate 50, a support plate 70, a plurality of clutch plates 82, a plurality of friction plates 81, a plurality (three in the present example) of bolts BL and a plurality (three in the present example) of springs SP.

The clutch housing 20 includes a disc portion 21 and a cylindrical portion 22. The disc portion 21 has one surface having a substantially circular shape and another surface opposite to the one surface. The cylindrical portion 22 is formed to extend from the outer peripheral end of the disc portion 21 in a direction in which the one surface of the disc portion 21 is directed.

In the following description, the central axis of the cylindrical portion 22 of the clutch housing 20 is referred to as a rotation axis RA of the clutch device 10. Further, the direction in parallel with the rotation axis RA is referred to as an axial direction AD. In Fig. 2 and subsequent diagrams, the axial direction AD of the clutch device 10 is suitably indicated by the arrows. Further, the direction in which the arrow is directed in the axial direction AD is referred to as a first axial direction 1D, and its opposite direction is referred to as a second axial direction 2D. In the present embodiment, the first axial direction 1D is the direction in which the one surface of the disc portion 21 is directed and corresponds to the direction directed from the left to the right of the motorcycle 100 of Fig. 1. Further, the second axial direction 2D is the direction in which the other surface of the disc portion 21 is directed and corresponds to the direction directed from the right to the left of the motorcycle 100 of Fig. 1.

Each of the plurality of friction plates 81 is annular. A plurality of teeth are formed at equal intervals in an entire periphery of the outer peripheral end of each friction plate 81. At the inner peripheral surface of the cylindrical portion 22 of the clutch housing 20, a plurality of teeth respectively corresponding to a plurality of teeth included in each friction plate 81 are formed. The plurality of teeth extend in the axial direction AD.

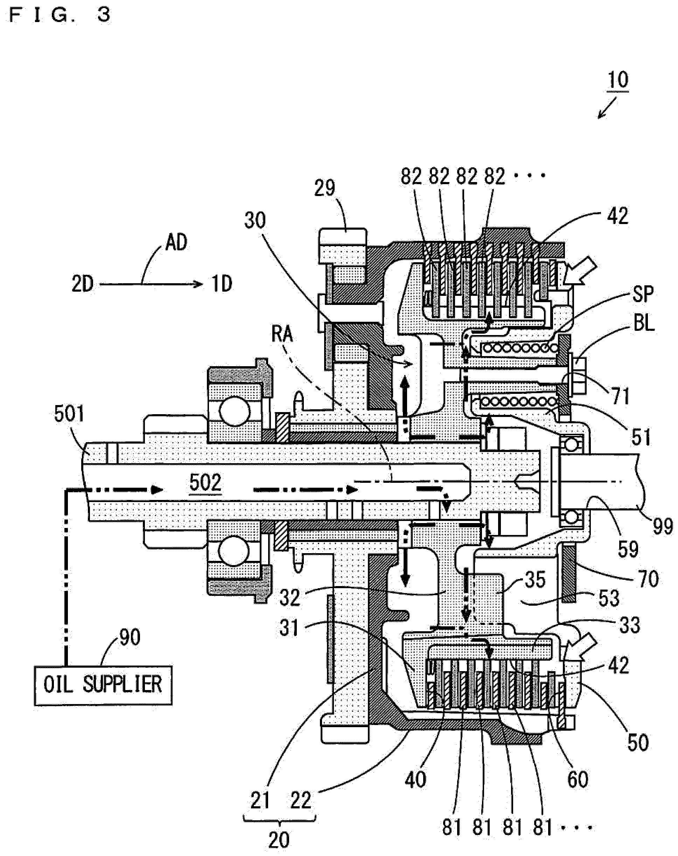

The input gear 29 is attached to the other surface of the disc portion 21. A center opening 28 is formed in a center portion of the disc portion 21. A main shaft 501 (Fig. 3) extending from the transmission 5b of Fig. 1 is inserted into the center opening 28. In this state, the clutch housing 20 is supported to be rotatable relative to the main shaft 501. The input gear 29 is rotated by a torque from a crankshaft (not shown) of the engine 5a. In this case, the clutch housing 20 is rotated together with the input gear 29.

The clutch boss 30 is provided in the cylindrical portion 22 of the clutch housing 20. The clutch boss 30 includes an annular portion 31, a disc portion 32 and a boss portion 33. The disc portion 32 has one surface directed in the first axial direction 1D and another surface directed in the second axial direction 2D. The boss portion 33 is substantially cylindrical and is formed to extend mainly in the first axial direction 1D from the outer peripheral end of the disc portion 32. The annular portion 31 is formed to surround the end (the rear end of the boss portion 33), directed in the second axial direction 2D, of the boss portion 33.

Each of the plurality of clutch plates 82 is annular. A plurality of teeth are formed at equal intervals in an entire periphery of the inner peripheral end of each clutch plate 82. At an outer peripheral surface 42 of the boss portion 33 of the clutch boss 30, a plurality of teeth respectively corresponding to a plurality of teeth included in each of a clutch plate 82, which is part of the plurality of clutch plates 82, are formed. The plurality of teeth extend in the axial direction AD.

A center opening 39 is formed in a center portion of the disc portion 32. The main shaft 501 (Fig. 3) extending from the transmission 5b of Fig. 1 is inserted into the center opening 39. In this state, the clutch boss 30 is supported to be non-rotatable relative to the main shaft 501. Therefore, in a case where the clutch boss 30 is rotated by a torque from the engine 5a, and in a case where the main shaft 501 of the transmission 5b is rotated by a torque from the rear wheel 7, the clutch boss 30 and the main shaft 501 are both rotated.

A plurality (three in the present example) of support projections 34 projecting in the first axial direction 1D are formed on the one surface of the disc portion 32 to surround the center opening 39. In each support projection 34, a through hole 34h, which causes the space on the one surface of the disc portion 32 to communicate with the space on the other surface of the disc portion 32, is formed. Threads with which a bolt BL can be attached are formed on the inner peripheral surface of the through hole 34h.

With the clutch boss 30 provided in the clutch housing 20, the plurality of friction plates 81 and the plurality of clutch plates 82 are provided alternately on the annular portion 31 of the clutch boss 30. At this time, the plurality of teeth of each of the plurality of friction plates 81 and the plurality of teeth formed at the inner peripheral surface of the cylindrical portion 22 of the clutch housing 20 are respectively engaged. In this state, the plurality of friction plates 81 are non-rotatable relative to the clutch housing 20 and movable in the axial direction AD relative to the clutch housing 20. Further, a plurality of teeth of each of a clutch plates 82, which is part of the plurality of clutch plates 82, and the plurality of teeth formed at the outer peripheral surface 42 of the boss portion 33 of the clutch boss 30 are respectively engaged. In this state, part of the clutch plates 82 is non-rotatable relative to the clutch boss 30 and movable in the axial direction AD relative to the clutch boss 30.

A center opening 59 is formed in a center portion of the pressure plate 50. Part of a release mechanism (a release member 99 of Fig. 3, described below) is attached to the center opening 59 via a bearing. The release mechanism is a mechanism for adjusting a transmission state of a torque in the clutch device 10 in accordance with a rider's operation of the clutch lever (not shown). The pressure plate 50 has one surface directed in the first axial direction 1D and another surface directed in the second axial direction 2D. A plurality (three in the present example) of spring storages 51 are formed at the one surface of the pressure plate 50. Each spring storage 51 is formed in a concave shape such that a spring SP can be stored. Further, the spring storage 51 has an annular bottom portion supporting the one end of a stored spring SP. Further, an opening into which a support projection 34 of the clutch boss 30 can be inserted is formed at an inner position of the annular bottom portion.

The pressure plate 50 is positioned such that the plurality of support projections 34 of the clutch boss 30 are inserted into the plurality of through holes of the plurality of spring storages 51. Further, the pressure plate 50 is provided on the clutch boss 30 such that the plurality of friction plates 81 and the plurality of clutch plates 82 are sandwiched between part of the pressure plate 50 and the annular portion 31 of the clutch boss 30. In this state, the plurality of springs SP are respectively provided in the plurality of spring storages 51 of the pressure plate 50.

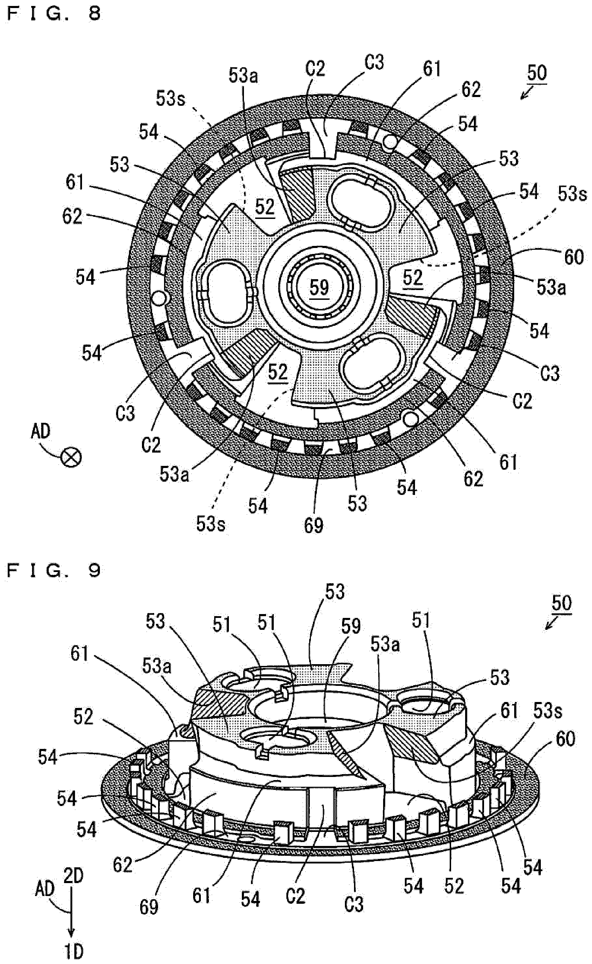

Here, as described below, a plurality of teeth 54 (Fig. 8) respectively corresponding to the plurality of teeth included in each remaining clutch plate 82 out of the plurality of clutch plates 82 are formed at the other surface of the pressure plate 50 of the present example. The pressure plate 50 is provided at the clutch boss 30, whereby the plurality of teeth of each of a remaining clutch plate 82 out of the plurality of clutch plates 82 and the plurality of teeth 54 (Fig. 8) formed at the other surface of the pressure plate 50 are respectively engaged. In this state, the remaining clutch plate 82 is non-rotatable relative to the pressure plate 50 and movable in the axial direction AD relative to the pressure plate 50. In the clutch device 10 according to the present embodiment, the number of the remaining clutch plate 82 is one.

The support plate 70 is substantially annular. In the support plate 70, a plurality of through holes 71 respectively corresponding to the plurality of through holes 34h of the clutch boss 30 are formed. The support plate 70 is provided on the pressure plate 50 such that each through hole 71 overlaps with a spring storage 51 of the pressure plate 50 and a through hole 34h of the clutch boss 30 in the axial direction AD. Each through hole 71 is formed such that a screw portion and a body portion of a bolt BL is insertable, and a head portion of a bolt BL is not insertable.

With the support plate 70 provided on the pressure plate 50, screw portions of the plurality of bolts BL are attached to the plurality of through holes 34h of the clutch boss 30 through the plurality of through holes 71 and the plurality of through holes of the pressure plate 50. In Fig. 2, attachment of two bolts BL out of the plurality of bolts BL to two through holes 34h of the clutch boss 30 is indicated by the thick dotted arrows and the thick one-dot and dash arrows.

As described above, with the pressure plate 50 attached to the clutch boss 30, the pressure plate 50 is rotatable relative to the clutch boss 30 in a certain angular range. The angular range is restricted by an assist cam mechanism and a slipper cam mechanism, described below.

### [3] Supply of Oil to Each Component of Clutch Device 10

Fig. 3 is a cross sectional view of the clutch device 10 of Fig. 1 cut along a plate including the rotation axis RA. In Fig. 3, the main shaft 501 of the transmission 5b connected to the clutch device 10 and the release member 99 for changing the state of the clutch device 10 are shown together with the plurality of constituent elements of the clutch device 10 described with the use of Fig. 2.

As shown in Fig. 3, the clutch device 10 according to the present embodiment further includes an oil supplier 90 for supplying oil into the clutch housing 20 in addition to the configuration shown in Fig. 2. The oil supplier 90 includes a pump and a plurality of oil flow paths.

An axis flow path 502 is provided in the main shaft 501 as part of the plurality of above-mentioned oil flow paths. The axis flow path 502 is formed to extend from the one end to the other end of the main shaft 501. A plurality of through holes that cause the axis flow path 502 to communicate with the space outside of the main shaft 501 are formed at a plurality of positions in the axial direction in the outer peripheral surface of the main shaft 501. With the one end of the main shaft 501 connected to the clutch device 10, at least part of the plurality of through holes of the main shaft 501 is positioned in the clutch housing 20.

As indicated by the thick two-dots and dash line in Fig. 3, when the pump of the oil supplier 90 is activated, oil is supplied into the axis flow path 502 from the other end of the main shaft 501. In this case, part of the oil supplied to the axis flow path 502 is guided into the clutch housing 20 through a through hole formed in the vicinity of the one end of the main shaft 501.

When the clutch housing 20 and the main shaft 501 are rotated, a centrifugal force is exerted on the oil guided into the clutch housing 20. Thus, a flow of oil is generated from the main shaft 501 toward the inner peripheral surface of the cylindrical portion 22 of the clutch housing 20. On the other hand, in the clutch housing 20, the boss portion 33 of the clutch boss 30 is substantially cylindrical and is arranged to surround the main shaft 501. Therefore, oil is fundamentally unlikely to flow through the annular space between the inner peripheral surface of the cylindrical portion 22 and the outer peripheral surface 42 of the boss portion 33. Therefore, it is normally difficult to supply a sufficient amount of oil to the plurality of friction plates 81 and the plurality of clutch plates 82.

If an oil flow path that causes the inside and outside of the boss portion 33 to communicate with each other is formed only in the boss portion 33, the thickness of the boss portion 33 must be increased in order to ensure mechanical strength of the boss portion 33 while a sufficiently large cross section of the flow path is ensured. However, when the thickness of the boss portion 33 is increased, a reduction in weight or size of the boss portion 33 cannot be realized.

Further, even in a case where the oil flow path that causes the inside and outside of the boss portion 33 to communicate with each other is formed only in the boss portion 33, a sufficient amount of oil cannot be supplied to all of the friction plates 81 and all of the clutch plates 82. In particular, as indicated by the outlined arrow in Fig. 3, it is difficult to supply oil to the friction plates 81 that are located close to the pressure plate 50, and the clutch plates 82.

The clutch device 10 according to the present embodiment is provided with the socalled assist cam mechanism and slipper cam mechanism. The assist cam mechanism and the slipper cam mechanism are constituted by a plurality (three in the present example) of first cams 35 provided at the clutch boss 30 and a plurality (three in the present example) of second cams 53 provided at the pressure plate 50. In the clutch device 10, the plurality of first cams 35 and the plurality of second cams 53 are arranged alternately on a circle extending about the rotation axis RA with the clutch device 10 viewed in the axial direction AD. In Fig. 3, one first cam 35 out of the plurality of first cams 35 and one second cam 53 out of the plurality of second cams 53 are shown.

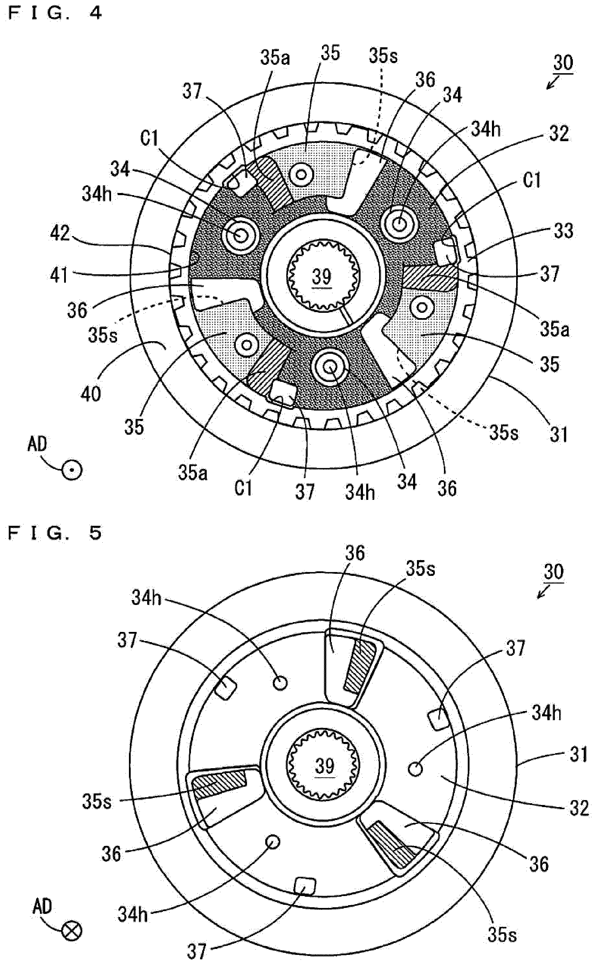

The plurality of first cams 35 and the plurality of second cams 53 abut against one another in a case where a difference in rotational speed is generated between the clutch boss 30 and the pressure plate 50. Specifically, when a difference in rotational speed is generated between the clutch boss 30 and the pressure plate 50 because a torque (positive torque) is exerted on the clutch boss 30 from the engine 5a, the assist cam mechanism is activated. In this case, first assist cam surfaces 35a (Fig. 4), described below, of the plurality of first cams 35 abut against second assist cam surfaces 53a (Fig. 8), described below, of the plurality of second cams 53 (Fig. 8), and the pressure plate 50 moves in the axial direction AD to be close to the clutch boss 30. Thus, an engaging force exerted between the plurality of friction plates 81 and the plurality of clutch plates 82 is enhanced.

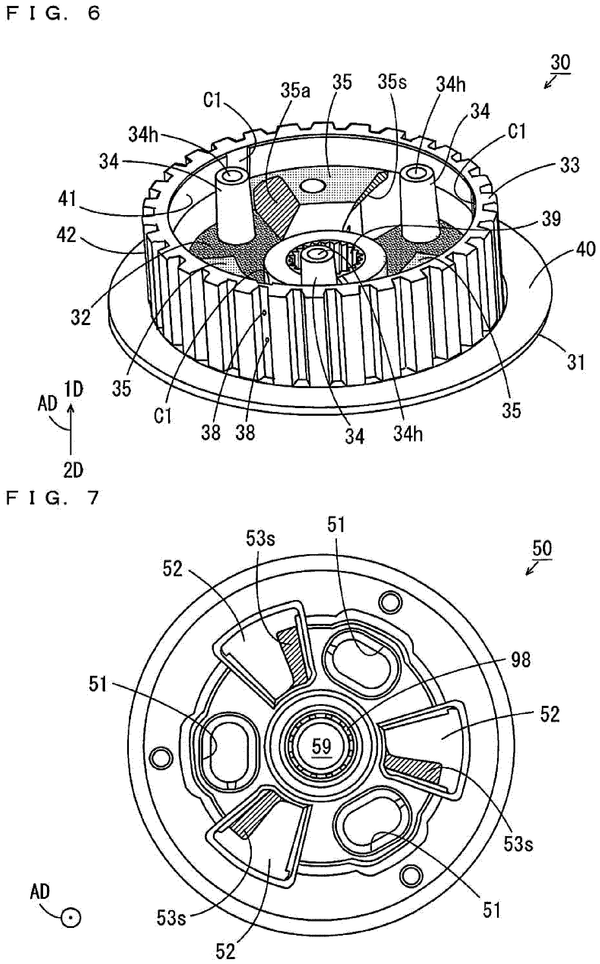

On the other hand, when a difference in rotational speed is generated between the clutch boss 30 and the pressure plate 50 because a torque (negative torque) is exerted on the clutch boss 30 from the transmission 5b, the slipper cam mechanism is activated. In this case, first slipper cam surfaces 35s (Fig. 5), described below, of the plurality of first cams 35 abut against second slipper cam surfaces 53a (Fig. 7), described below, of the plurality of second cams 53, and the pressure plate 50 moves in the axial direction AD to be move away from the clutch boss 30. Thus, an engaging force exerted between the plurality of friction plates 81 and the plurality of clutch plates 82 is weakened.

Here, suppose that a torque is not applied to the clutch boss 30, and a relatively weak engaging force (an engaging force in case of a semi-clutch state, for example) is exerted between the plurality of friction plates 81 and the plurality of clutch plates 82. In this case, in a case where a sufficient amount of oil cannot be supplied to the friction plates 81 located close to the pressure plate 50, and the clutch plates 82, a sufficient drag torque cannot be exerted on these plates. Therefore, the rotational speed of the clutch boss 30 may be higher than the rotational speed of the pressure plate 50. At this time, when a difference in rotational speed between the clutch boss 30 and the pressure plate 50 further changes, the first assist cam surfaces 35a (Fig. 4) and the second assist cam surfaces 53a (Fig. 8) abut against one another and separate from one another, repeatedly, as described above in the introduction. Thus, a clunking noise is successively generated.

A state in which a torque is not applied to the clutch boss 30 and a relatively weak engaging force is exerted between the plurality of friction plates 81 and the plurality of clutch plates 82 refers to a state in which the gear position of the transmission 5b is in a neutral position and the clutch device 10 is in the semi-clutch state, for example.

Further, the above-mentioned change of a difference in rotational speed is generated due to extension and contraction of a spring SP, a change in torque of the engine 5a and a change in drag torque exerted on the plurality of friction plates 81 and the plurality of clutch plates 82, for example.

In consideration of the above-mentioned points, in the clutch device 10 according to the present embodiment, the structures of the clutch boss 30 and the pressure plate 50 are devised such that a sufficient amount of oil that is supplied into the boss portion 33 is smoothly guided to the friction plates 81 located close to the pressure plate 50, and the clutch plates 82. The structures of the clutch boss 30 and the pressure plate 50 will be described in detail.

### [4] Details of Structure of Clutch Boss 30

Fig. 4 is a plan view of the clutch boss 30 as viewed in the second axial direction 2D. Fig. 5 is a plan view of the clutch boss 30 as viewed in the first axial direction 1D. Further, Fig. 6 is an external perspective view of the clutch boss 30. In Figs. 4 to 6, in order to facilitate understanding of the structure of the clutch boss 30, a plurality of patterns (a dotted pattern and hatching) that are identifiable from each other are applied to a plurality of portions of the outer surface of the clutch boss 30. The magnification rate of the external perspective view of Fig. 6 is different from that of the plan views of Figs. 4 and 5.

As shown in Figs. 4 and 6, in the annular portion 31 of the clutch boss 30, one surface directed in the first axial direction 1D functions as a pressure-receiving surface 40. The pressure-receiving surface 40 projects outwardly from the boss portion 33 in radial direction that is perpendicular to the axial direction AD of the axis RA. The pressure-receiving surface 40 receives a pressure force from the pressure plate 50 via the plurality of friction plates 81 and the plurality of clutch plates 82. Thus, an engaging force is generated between the plurality of friction plates 81 and the plurality of clutch plates 82.

A center opening 39 is formed in a center portion of the disc portion 32. Serration for fixing the one end of the main shaft 501 to be inserted into the center opening 39 is formed on the inner periphery of the center opening 39. The three support projections 34 and the three first cams 35 are formed on the one surface of the disc portion 32 to surround the center opening 39. Each support projection 34 is columnar and extends in the first axial direction 1D from the one surface of the disc portion 32 to a position at the same height as the tip of the boss portion 33. A through hole 34h extending in the axial direction AD is formed in a support projection 34.

Each first cam 35 is located between two support projections 34 in a circumferential direction extending about the center opening 39. The first cam 35 projects in the first axial direction 1D from the one surface of the disc portion 32 to a position at about half of the height of a support projection 34. The first cam 35 has a first assist cam surface 35a and a first slipper cam surface 35s.

The first assist cam surface 35a is inclined in a counter-clockwise direction extending about the center opening 39 with the clutch boss 30 viewed in the second axial direction 2D, and in the first axial direction 1D. The first slipper cam surface 35s is inclined in a clockwise direction extending about the center opening 39 with the clutch boss 30 viewed in the second axial direction 2D, and in the second axial direction 2D. As shown in Figs. 4 and 5, in the disc portion 32, an opening 36 having a substantially sector shape is formed in a portion between the first slipper cam surface 35s of each first cam 35 and a support projection 34 opposite to the first slipper cam surface 35s.

As shown in Figs. 4 and 6, at the inner peripheral surface 41 of the boss portion 33, a first concave portion C1 extending in the axial direction AD is formed at a position in the vicinity of each first assist cam surface 35a. Further, as shown in Figs. 4 and 5, in the disc portion 32, a substantially rectangular through hole 37 that penetrates the disc portion 32 in the axial direction AD is formed in the vicinity of a first concave portion C1 of the inner peripheral surface 41 of the boss portion 33. Further, as shown in Fig. 6, a plurality (two in the present example) of through holes 38 penetrating from the inner peripheral surface 41 to the outer peripheral surface 42 are formed in a portion in which a first concave portion C1 is formed in the inner peripheral surface 41 of the boss portion 33.

### [5] Details of Structure of Pressure Plate 50

Fig. 7 is a plan view of the pressure plate 50 as viewed in the second axial direction 2D. Fig. 8 is a plan view of the pressure plate 50 as viewed in the first axial direction 1D. Further, Fig. 9 is an external perspective view of the pressure plate 50. In Figs. 7 to 9, in order to facilitate understanding of the structure of the pressure plate 50, a plurality of patterns (a dotted pattern and hatching) that are identifiable from each other are applied to a plurality of portions of the outer surface of the pressure plate 50. The magnification rate of the external perspective view of Fig. 9 is different from that of the plan views of Figs. 7 and 8.

As shown in Fig. 8, in the pressure plate 50, an annular region having a certain width from the outer peripheral end in the other surface directed in the second axial direction 2D functions as a pressure surface 60. The pressure surface 60 presses the plurality of friction plates 81 and the plurality of clutch plates 82 toward the pressure-receiving surface 40 of the clutch boss 30 by an elastic force of the plurality of springs SP.

In part of the pressure surface 60, an annular region 69 having a substantially constant width is set at the intermediate position between the outer peripheral end and the inner peripheral end of the pressure surface 60 to draw a circle extending about the center opening 59. In the annular region 69, the plurality of teeth 54 are formed at substantially equal intervals except for one portion. As shown in Fig. 9, the plurality of teeth 54 project in the second axial direction 2D from the annular region 69. Further, as described above, the plurality of teeth 54 are engaged with a plurality of teeth of a remaining clutch plate 82 out of the plurality of clutch plates 82.

The center opening 59 is formed in a center portion of the pressure plate 50. A bearing for attachment of the release member 99 of Fig. 3 is provided at the inner periphery of the center opening 59.

A fitting portion 61 is formed in a region inward of the pressure surface 60 in the other surface of the pressure plate 50. The fitting portion 61 projects in the second axial direction 2D by a certain height with respect to the pressure surface 60 to be fittable into the boss portion 33 of the clutch boss 30.

As shown in Fig. 8, the fitting portion 61 has an outer peripheral surface 62 that is formed to extend along at least part of the inner peripheral end of the pressure surface 60 with the pressure plate 50 viewed in the axial direction AD. The outer peripheral surface 62 of the fitting portion 61 is opposite to the inner peripheral surface 41 of the boss portion 33 when the fitting portion 61 is fitted into the boss portion 33 of the clutch boss 30. Further, at the outer peripheral surface 62 of the fitting portion 61, a plurality (three in the present example) of second concave portions C2 are formed at equal intervals with respect to the center opening 59. Each second concave portion C2 is formed to extend from the pressure surface 60 in the second axial direction 2D.

A third concave portion C3 is formed in a region extending from each second concave portion C2 of a fitting portion 61 toward the outer peripheral end of the pressure surface 60 and reaching the annular region 69 in the pressure surface 60. A tooth 54 is not formed in a portion located outwardly of a third concave portion C3 in the annular region 69 of the pressure surface 60.

As shown in Figs. 8 and 9, three second cams 53 are formed on the fitting portions 61 to surround the center opening 59. Each second cam 53 is formed to further project in the second axial direction 2D by a certain height from the tip of a fitting portion 61. The second cam 53 has a second assist cam surface 53a and a second slipper cam surface 53s.

The second assist cam surface 53a is inclined in an counterclockwise direction extending about the center opening 59 with the pressure plate 50 viewed in the first axial direction 1D, and the second axial direction 2D. The second slipper cam surface 53s is inclined in a clockwise direction extending about the center opening 59 with the pressure plate 50 viewed in the first axial direction 1D, and the first axial direction 1D. As shown in Figs. 7 and 8, in a fitting portion 61, an opening 52 having a substantially sector shape is formed in a portion between two of the three second cams 53.

As shown in Fig. 7, in the one surface of the pressure plate 50 directed in the first axial direction 1D, a spring storage 51 is formed in a region that overlaps with each second cam 53 of Fig. 8. As described above, a spring storage 51 is formed to be able to store a spring SP of Fig. 2. Further, in the spring storage 51, an annular (an oval annular in the present example) bottom portion supporting the one end of a spring SP is formed. Further, an opening is formed inwardly of the annular bottom portion.

### [6] Oil Flow Path Formed Between Clutch Boss 30 and Pressure Plate 50

With the pressure plate 50 attached to the clutch boss 30, the oil flow path extending in the axial direction AD is formed between the outer peripheral surface 42 of the boss portion and the outer peripheral surface 62 of the fitting portion 61. The oil flow path will be described.

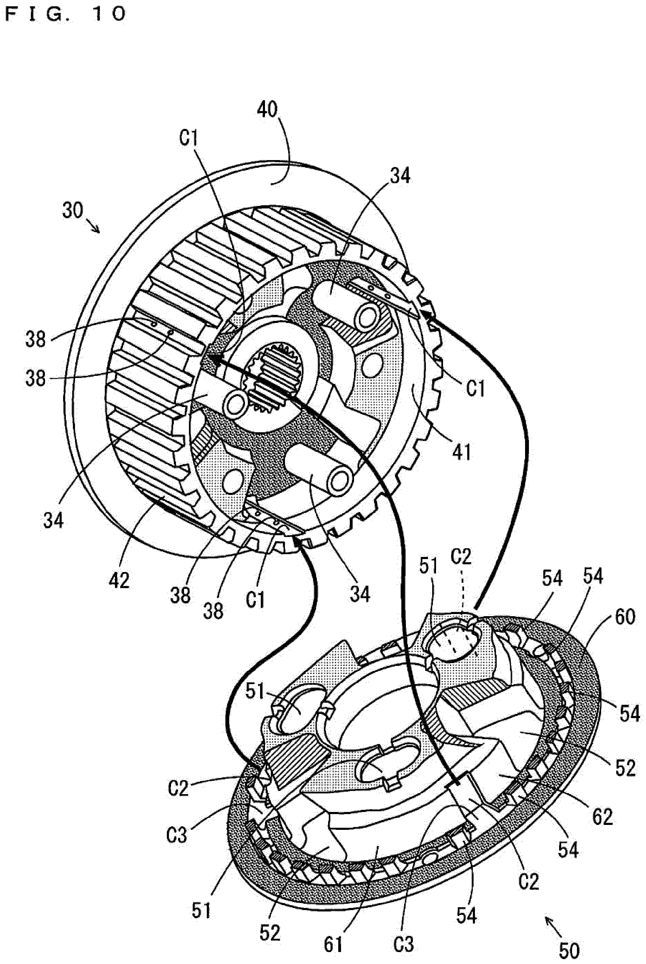

Fig. 10 is a diagram for explaining the positional relationship between the plurality of first concave portions C1 of the clutch boss 30 and the plurality of second concave portions C2 of the pressure plate 50 in a case where the pressure plate 50 is attached to the clutch boss 30. In Fig. 10, in order to facilitate understanding of the positional relationship between the plurality of first concave portions C1 of the clutch boss 30 and the plurality of second concave portions C2 of the pressure plate 50, the plurality of friction plates 81 and the plurality of clutch plates 82 are not shown. Further, in Fig. 10, similarly to the examples of Figs. 4 to 9, a plurality of patterns (a dotted pattern and hatching) that are identifiable from each other are applied to a plurality of portions of the outer surfaces of the clutch boss 30 and the pressure plate 50.

As indicated by the thick arrows in Fig. 10, the fitting portions 61 of the pressure plate 50 are fitted into the boss portion 33 of the clutch boss 30 such that the plurality of first concave portions C1 and the plurality of second concave portions C2 are opposite to each other. At this time, the plurality of support projections 34 of the clutch boss 30 are inserted into the openings formed in the plurality of spring storages 51 of the pressure plate 50.

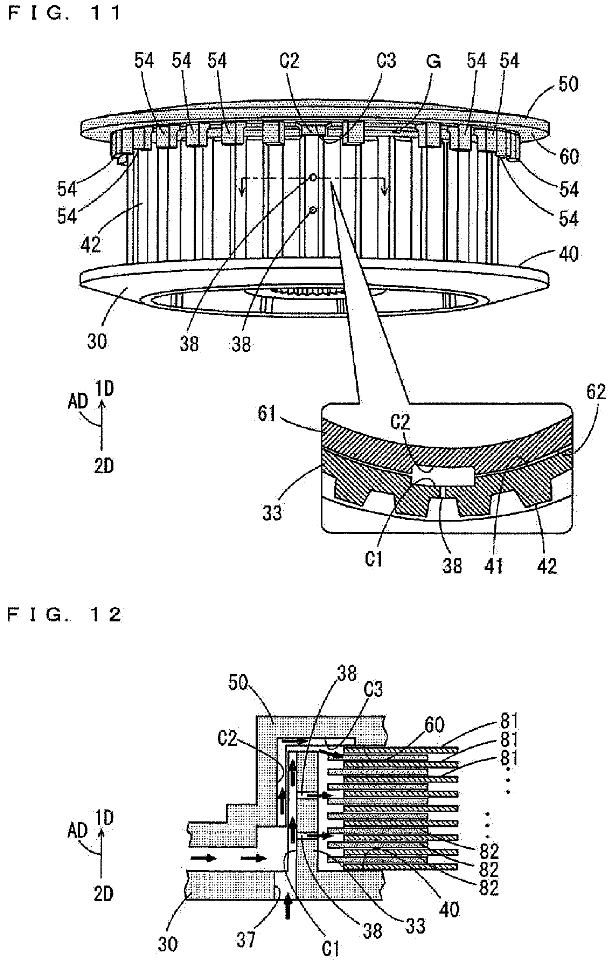

Fig. 11 is an external perspective view showing the pressure plate 50 attached to the clutch boss 30. In Fig. 11, similarly to the example of Fig. 10, either the plurality of friction plates 81 or the plurality of clutch plates 82 are not shown. In Fig. 11, a dotted pattern is applied to the pressure plate 50 such that the clutch boss 30 and the pressure plate 50 can be distinguished clearly.

Further, in Fig. 11, the one-dot and dash line extending in a circumferential direction of the outer peripheral surface 42 is shown to pass through one through hole 38 of the clutch boss 30. Further, in Fig. 11, the cross sections of the clutch boss 30 and the pressure plate 50 that are in parallel with the one-dot and dash line and orthogonal to the axial direction AD are shown in a balloon.

As shown in the balloon in Fig. 11, a relatively large space is formed in a first concave portion C1 and a second concave portion C2 when the first concave portion C1 of the clutch boss 30 and the second concave portion C2 of the pressure plate 50 are opposite to each other. The space constitutes the oil flow path that guides the oil supplied into the boss portion 33 to the tip of the boss portion 33.

In the clutch device 10, as described above, the clutch boss 30 and the pressure plate 50 are rotatable relative to each other in a certain angular range. The angular range is set such that at least parts of a first concave portion C1 and a second concave portion C2 that are corresponding to each other are opposite to each other at all times. Thus, the oil flow path having a relatively large flow path cross section is ensured.

With the pressure plate 50 attached to the clutch boss 30, a gap G is formed between the tip of the boss portion 33 directed in the first axial direction 1D and the pressure surface 60. Further, a third concave portion C3 is formed in a portion of the pressure surface 60 extending outwardly from a second concave portion C2. Thus, in the gap G formed between the tip of the boss portion 33 and the pressure surface 60, the space in a second concave portion C2 adjacent to the pressure surface 60 is released outwardly of the boss portion 33 in a relatively wide range.

Fig. 12 is a schematic cross sectional view for explaining a flow of oil in a first concave portion C1, a second concave portion C2, a third concave portion C3 and a plurality of through holes 38 of Fig. 11. As shown in Fig. 12, the oil supplied from the oil supplier 90 of Fig. 3 into the boss portion 33 is guided to the tip of the boss portion 33 through the oil flow path constituted by the first concave portion C1 and the second concave portion C2 as indicated by the thick solid arrows. At this time, part of the oil flowing through the oil flow path flows outwardly of the outer peripheral surface 42 of the boss portion 33 through the plurality of through holes 38 from the oil flow path. The oil that has flowed outwardly of the outer peripheral surface 42 is guided to a clutch plate 82 that is engaged with the boss portion 33 out of the plurality of clutch plates 82.

Further, remaining oil flowing through the oil flow path is guided to the tip of the boss portion 33. The oil guided to the tip of the boss portion 33 is further guided to the remaining clutch plate 82 engaged with the pressure plate 50 out of the plurality of clutch plates 82 through the space in the second concave portion C2 and the space in the third concave portion C3.

### [7] Effects of Embodiments

(1) In the clutch device 10 according to the present embodiment, in the semi-clutch state in which the clutch housing 20 is rotated, the clutch boss 30 is rotated by a drag torque exerted on the plurality of friction plates 81 and part of the clutch plates 82. Thus, the rotational speed of the clutch boss 30 tends to be higher than the rotational speed of the pressure plate 50.

With the above-mentioned configuration, the cross section of the oil flow path formed of a first concave portion C1 and a second concave portion C2 is sufficiently larger than the cross section of the oil flow path constituted by only either one of the first concave portion C1 and the second concave portion C2. Therefore, a large amount of oil flowing through the oil flow path formed of the first concave portion C1 and the second concave portion C2 is smoothly guided to the tip of the boss portion 33. Further, a large amount of oil guided to the tip of the boss portion 33 is smoothly supplied to at least one plate from a third concave portion C3 of the pressure surface 60 of the pressure plate 50. Thus, at least one plate, located between the tip of the boss portion 33 of the clutch boss 30 and the pressure surface 60 of the pressure plate 50, out of the plurality of friction plates 81 and the plurality of clutch plates 82 is moistened. In this case, a drag torque of at least one plate with respect to the pressure surface 60 of the pressure plate 50 is increased. As a result, the pressure plate 50 is rotated together with the clutch boss 30 and at least one plate.

In this manner, the rotational speed of the clutch boss 30 being higher than the rotational speed of the pressure plate 50 is suppressed. Thus, when the clutch device 10 is in the semi-clutch state, a first assist cam surface 35a and a second assist cam surface 53a are kept abutting against each other. Therefore, the first assist cam surface 35a and the second assist cam surface 53a are prevented from abutting against each other and separating from each other, repeatedly, and repetitive and successive generation of a clunking noise is suppressed.

(2) As described above, in the pressure plate 50, teeth 54 are not formed in a portion located outwardly of a third concave portion C3 (on an extending line of the third concave portion C3) in the annular region 69 of the pressure surface 60. Thus, the oil guided by the first concave portion C1, the second concave portion C2 and the third concave portion C3 are smoothly guided to the one or plurality of clutch plates 82 engaged with the pressure plate 50 without being interfered by the plurality of teeth 54.

(3) As described above, the plurality of through holes 38 are formed in the first concave portion C1 of the boss portion 33. Thus, with the simple configuration, part of a large amount of oil flowing through the oil flow path can be uniformly and smoothly guided to the plurality of clutch plates 82 engaged with the boss portion 33.

(4) In the above-mentioned clutch device 10, a friction plate 81, which is located closest to the pressure surface 60 of the pressure plate 50, out of the plurality of friction plates 81 is referred to as a first friction plate. Further, a friction plate 81 located closest to the pressure-receiving surface 40 of the clutch boss 30 out of the plurality of friction plate 81 is referred to as a second friction plate. In this case, the first and second friction plates are preferably configured such that a drag torque exerted on the first friction plate is larger than a drag torque exerted on the second friction plate when the clutch device 10 is in the semi-clutch state. Thus, the rotational speed of the clutch boss 30 being higher than the rotational speed of the pressure plate 50 is suppressed.

It is possible to adjust a drag torque exerted on each of the first and second friction plates by suitably changing the material and shape of each friction plate, a friction coefficient of the surface of each friction plate, etc.

### [8] Other Embodiments

(1) In the above-mentioned embodiment, a clutch plate 82, which is part of the plurality of clutch plates 82, is engaged with the clutch boss 30, and a remaining clutch plate 82 is engaged with the pressure plate 50. However, the present teaching is not limited to this. All of the plurality of clutch plates 82 may be engaged with the clutch boss 30. In this case, it is not necessary for the clutch plates 82 to be engaged with the pressure plate 50. Therefore, a plurality of teeth 54 are not formed at the pressure plate 50.
(2) While the three first cams 35 are formed at the clutch boss 30 in the above-mentioned embodiment, only one first cam 35 may be formed at the clutch boss 30, or two, four or more than four first cams 35 may be formed at the clutch boss 30. In this case, two or more than two second cams 53 are provided at the pressure plate 50 to sandwich at least one first cam 35.
(3) While the three second cams 53 are formed at the pressure plate 50 in the above-mentioned embodiment, only one second cam 53 may be formed at the pressure plate 50, or two, four or more than four second cams 53 may be formed at the pressure plate 50. In this case, two or more than two first cams 35 are provided at the clutch boss 30 to sandwich at least one second cam 53.
(4) While the two through holes 38 arranged in the axial direction AD are formed in a portion in which each second concave portion C2 is formed in the boss portion 33 in the above-mentioned embodiment, the present teaching is not limited to this. In a portion in which each second concave portion C2 is formed in the boss portion 33, only one through hole 38 may be formed, or three or more than three through holes 38 arranged in the axial direction AD may be formed.
(5) While oil is supplied into the boss portion 33 through the axis flow path 502 in the main shaft 501 in the above-mentioned embodiment, the present teaching is not limited to this. Instead of the axis flow path 502 or in addition to the axis flow path 502, the clutch device 10 may have a configuration for supplying oil into the boss portion 33 from a position located farther away from the pressure plate 50 in the first axial direction 1D.
(6) While the above-mentioned embodiment is an example in which the present teaching is applied to the motorcycle, the present teaching is not limited to this. The present teaching may be applied to another straddled vehicle such as a four-wheeled automobile, a motor tricycle or an ATV (All Terrain Vehicle).

### [9] Correspondences between Constituent Elements in Claims and Parts in Preferred Embodiments

In the following paragraphs, non-limiting examples of correspondences between various elements recited in the claims below and those described above with respect to various preferred embodiments of the present invention are explained.

In the above-mentioned embodiment, the rotation axis RA is an example of an axis, the clutch housing 20 is an example of a clutch housing, the inner peripheral surface 41 is an example of an inner peripheral surface, the outer peripheral surface 42 is an example of a first outer peripheral surface, the boss portion 33 is an example of a boss portion, the pressure-receiving surface 40 is an example of a pressure-receiving surface, the clutch boss 30 is an example of a clutch boss, the outer peripheral surface 62 is an example of a second outer peripheral surface, the fitting portion 61 is an example of a fitting portion, the pressure surface 60 is an example of a pressure surface and the pressure plate 50 is an example of a pressure member.

Further, the plurality of friction plates 81 and the plurality of clutch plates 82 are an example of a plurality of friction plates, the oil supplier 90 and an axis flow path 502 are examples of an oil supplier, the first assist cam surface 35a is an example of a first cam surface, the second assist cam surface 53a is an example of a second cam surface, the first concave portion C1 is an example of a first concave portion, the second concave portion C2 is an example of a second concave portion, the third concave portion C3 is an example of a third concave portion, and the clutch device 10 is an example of a clutch device.

Further, the plurality of friction plates 81 are an example of a plurality of first friction plates, the plurality of clutch plates 82 are an example of a plurality of second friction plates, a plurality of teeth 54 are an example of a plurality of teeth, the plurality of through holes 38 are an example of one or a plurality of through holes, the rear wheel 7 is an example of a drive wheel, the engine 5a is an example of an engine, the transmission 5b is an example of a transmission and the motorcycle 100 is an example of a straddled vehicle.

## Claims

1. A clutch device (10) comprising:
a clutch housing (20) provided to be rotatable about an axis (RA) extending in the axial direction (AD);
a clutch boss (30) that has a boss portion (33) surrounding the axis (RA) and having an inner peripheral surface (41) and a first outer peripheral surface (42), and an annular pressure-receiving surface (40) that projects outwardly in radial direction with regard to the axis (RA) from the boss portion (33), and is provided in the clutch housing (20) to be rotatable about the axis (RA);
a pressure member (50) that has a fitting portion (61) being fitted into the boss portion (33) and having a second outer peripheral surface (62), and an annular pressure surface (60) opposite to the pressure-receiving surface (40), and is configured to be movable in an axial direction, which is the axial direction (AD), relative to the clutch boss (30) and rotatable relative to the clutch boss (30);
a plurality of friction plates (81, 82) provided between the pressure-receiving surface (40) and the pressure surface (60); and
an oil supplier (90) that is configured to supply oil into the boss portion (33), wherein the clutch boss (30) and the pressure member (50) respectively have a first cam surface (35a) and a second cam surface (53a) that are abuttable against each other and separable from each other by relative rotation between the clutch boss (30) and the pressure member (50),
a first concave portion (C1) that is configured to guide oil from the oil supplier (90) to a tip of the boss portion (33) is formed at the inner peripheral surface (41) of the boss portion (33),
**characterized in that** the clutch device further comprises:
a second concave portion (C2) that is configured to guide oil from the oil supplier (90) to the pressure surface (60) is formed at the second outer peripheral surface (62) of the pressure member (50) to be at least partially opposite to the first concave portion (C1), and
a third concave portion (C3) that is configured to guide oil guided by the first concave portion (C1) and the second concave portion (C2) to at least one friction plate including a friction plate located closest to the pressing surface is formed at the pressure surface (60).

2. The clutch device (10) according to claim 1, wherein the plurality of friction plates (81, 82) include a plurality of first friction plates (81) and a plurality of second friction plates (82) that are alternately provided to be movable in the axial direction (AD) between the pressure-receiving surface (40) and the pressure surface (60),
the plurality of first friction plates (81) are provided to be non-rotatable relative to the clutch housing (20),
a plurality of second friction plates (82) out of the plurality of second friction plates (82) are provided to be non-rotatable relative to the boss portion (33),
one remaining second friction plate (82) or a plurality of remaining second friction plates (82) out of the plurality of second friction plates (82) are provided to be non-rotatable relative to the fitting portion (61), and
the first concave portion (C1), the second concave portion (C2) and the third concave portion (C3) are configured to guide oil from the oil supplier (90) to at least one first friction plate (81), including a friction plate located closest to the pressure surface (60), out of the plurality of first friction plates (81).

3. The clutch device (10) according to claim 2, wherein a plurality of teeth (54) are provided in a region except for a portion located outwardly of the third concave portion (C3) of the pressure surface (60) of the pressure member (50), and
the plurality of second friction plates (82) are engaged with the plurality of teeth (54) to be non-rotatable relative to the pressure member (50).

4. The clutch device (10) according to claim 2 or 3, wherein a drag torque of a first friction plate located closest to the pressure surface (60) of the pressure member (50) out of the plurality of first friction plates (81) is larger than a drag torque of a first friction plate located closest to the pressure-receiving surface (40) of the clutch boss (30).

5. The clutch device (10) according to any one of claims 1 to 4, wherein one or a plurality of through holes (38) that penetrate from the inner peripheral surface (41) to the first outer peripheral surface (42) of the boss portion (33) are formed in the first concave portion (C1).

6. A straddled vehicle comprising:
a drive wheel (7);
the clutch device (10) according to any one of claims 1 to 5;
an engine (5a) that is configured to supply a rotational force to the clutch housing (20) of the clutch device (10); and
a transmission (5b) that is configured to transmit a rotational force of the clutch boss (30) of the clutch device (10) to the drive wheel (7).

## Patentansprüche

1. Eine Kupplungsvorrichtung (10), die umfasst:
ein Kupplungsgehäuse (20), das um eine Achse (RA) drehbar ist, die sich in der Axial-Richtung (AD) erstreckt;
eine Kupplungsnabe (30), die einen Nabenabschnitt (33) hat, der die Achse (RA) umgibt, und eine innere Umfangsfläche (41) und eine erste äußere Umfangsfläche (42) hat, und eine ringförmige Druckaufnahmefläche (40), die in radialer Richtung in Bezug auf die Achse (RA) von dem Nabenabschnitt (33) nach außen vorsteht, und in dem Kupplungsgehäuse (20) vorgesehen ist, um um die Achse (RA) drehbar zu sein;
ein Druckelement (50), das einen Einpassabschnitt (61) hat, der in den Nabenabschnitt (33) eingepasst ist, und eine zweite äußere Umfangsfläche (62) und eine ringförmige Druckfläche (60) gegenüber der Druckaufnahmefläche (40) hat, und so konfiguriert ist, dass es in einer Axial-Richtung, welche die Axial-Richtung (AD) ist, relativ zu der Kupplungsnabe (30) bewegbar ist, und relativ zu der Kupplungsnabe (30) drehbar ist;
eine Mehrzahl von Reibplatten (81, 82), die zwischen der Druckaufnahmefläche (40) und der Druckfläche (60) vorgesehen sind; und
einen Ölversorger (90), der konfiguriert ist, um den Nabenabschnitt (33) mit Öl zu versorgen, wobei
die Kupplungsnabe (30) und das Druckelement (50) jeweils eine erste Nockenfläche (35a) und eine zweite Nockenfläche (53a) haben, die aneinander anlegbar und durch relative Drehung zwischen der Kupplungsnabe (30) und dem Druckelement (50) voneinander trennbar sind,
ein erster konkaver Abschnitt (C1), der konfiguriert ist, um Öl von dem Ölversorger (90) zu einer Spitze des Nabenabschnitts (33) zu führen, an der inneren Umfangsfläche (41) des Nabenabschnitts (33) ausgebildet ist,
**dadurch gekennzeichnet, dass** die Kupplungsvorrichtung weiterhin umfasst:
ein zweiter konkaver Abschnitt (C2), der konfiguriert ist, um Öl von dem Ölversorger (90) zu der Druckfläche (60) zu führen, der an der zweiten äußeren Umfangsfläche (62) des Druckelements (50) ausgebildet ist, um zumindest teilweise dem ersten konkaven Abschnitt (C1) gegenüberzuliegen, und
ein dritter konkaver Abschnitt (C3), der konfiguriert ist, um Öl, das von dem ersten konkaven Abschnitt (C1) und dem zweiten konkaven Abschnitt (C2) geführt ist, zu zumindest einer Reibplatte zu führen, einschließlich einer Reibplatte, die sich am nächsten an der Druckfläche befindet, an der Druckfläche (60) ausgebildet ist.

2. Die Kupplungsvorrichtung (10) gemäß Anspruch 1, wobei die Mehrzahl von Reibscheiben (81, 82) eine Mehrzahl von ersten Reibscheiben (81) und eine Mehrzahl von zweite Reibscheiben (82) beinhalten, die abwechselnd vorgesehen sind, um in der Axial-Richtung (AD) zwischen der Druckaufnahmefläche (40) und der Druckfläche (60) bewegbar zu sein,
die Mehrzahl der ersten Reibscheiben (81) vorgesehen sind, so dass sie relativ zum Kupplungsgehäuse (20) nicht drehbar sind,
eine Mehrzahl von zweiten Reibplatten (82) aus der Mehrzahl von zweiten Reibplatten (82) vorgesehen sind, um relativ zu dem Nabenabschnitt (33) nicht drehbar zu sein,
eine verbleibende zweite Reibplatte (82) oder eine Mehrzahl von verbleibenden zweiten Reibplatten (82) aus der Mehrzahl von zweiten Reibplatten (82) vorgesehen sind, so dass sie relativ zu dem Einpassabschnitt (61) nicht drehbar sind, und
der erste konkave Abschnitt (C1), der zweite konkave Abschnitt (C2) und der dritte konkave Abschnitt (C3) konfiguriert sind, um Öl von dem Ölversorger (90) zu zumindest einer ersten Reibplatte (81), einschließlich einer Reibplatte, die der Druckfläche (60) am nächsten liegt, aus der Mehrzahl der ersten Reibplatten (81) zu zuführen.

3. Die Kupplungsvorrichtung (10) gemäß Anspruch 2, wobei eine Mehrzahl von Zähnen (54) in einem Bereich mit Ausnahme eines Abschnitts vorgesehen ist, der sich außerhalb des dritten konkaven Abschnitts (C3) der Druckfläche (60) des Druckelements (50) befindet, und
die Mehrzahl der zweiten Reibplatten (82) mit der Mehrzahl der Zähnen (54) in Eingriff stehen, um relativ zu dem Druckelement (50) nicht drehbar zu sein.

4. Die Kupplungsvorrichtung (10) gemäß Anspruch 2 oder 3, wobei ein Schleppmoment einer ersten Reibplatte, die von der Mehrzahl von ersten Reibplatten (81) der Druckfläche (60) des Druckelements (50) am nächsten liegt, größer ist als ein Schleppmoment einer ersten Reibplatte, die der Druckaufnahmefläche (40) der Kupplungsnabe (30) am nächsten liegt.

5. Die Kupplungsvorrichtung (10) gemäß irgendeinem der Ansprüche 1 bis 4, wobei ein oder eine Mehrzahl von Durchgangslöchern (38), die von der inneren Umfangsfläche (41) zu der ersten äußeren Umfangsfläche (42) des Nabenabschnitts (33) hindurch treten, in dem ersten konkaven Abschnitt (C1) ausgebildet sind.

6. Ein Spreiz-Sitz-Fahrzeug, das umfasst:
ein Antriebsrad (7);
die Kupplungsvorrichtung (10) gemäß irgendeinem der Ansprüche 1 bis 5;
einen Motor (5a), der konfiguriert ist, um eine Drehkraft auf das Kupplungsgehäuse (20) der Kupplungsvorrichtung (10) auszuüben; und
ein Getriebe (5b), das konfiguriert ist, um eine Drehkraft der Kupplungsnabe (30) der Kupplungsvorrichtung (10) auf das Antriebsrad (7) zu übertragen.

## Revendications

1. Dispositif d'embrayage (10) comprenant :
un carter d'embrayage (20) prévu pour pouvoir tourner autour d'un axe (RA) s'étendant dans la direction axiale (AD) ,
un bossage d'embrayage (30) qui comporte un bossage (33) entourant l'axe (RA) et possédant une surface périphérique interne (41) et une première surface périphérique externe (42), ainsi qu'une surface annulaire de réception de pression (40) qui dépasse vers l'extérieur dans une direction radiale par rapport à l'axe (RA) depuis le bossage (33) et qui est disposé dans le carter d'embrayage (20) pour pouvoir tourner autour de l'axe (RA),
un élément de pression (50), qui possède un organe d'adaptation (61) ajusté dans le bossage (33) et comportant une seconde surface périphérique externe (62) ainsi qu'une surface de pression annulaire (60) opposée à la surface de réception de pression (40), et qui est configuré pour pouvoir se déplacer dans une direction axiale, qui est la direction axiale (AD), par rapport au bossage d'embrayage (30) et qui peut tourner par rapport au bossage d'embrayage (30),
une pluralité de plaques de frottement (81, 82) disposées entre la surface de réception de pression (40) et la surface de pression (60), et
un distributeur d'huile (90) qui est configuré pour délivrer de l'huile dans le bossage (33), où le bossage d'embrayage (30) et l'élément de pression (50) possèdent respectivement une première surface de came (35a) et une seconde surface de came (53a) qui peuvent venir en butée l'une contre l'autre et sont séparables l'une de l'autre grâce à une rotation relative entre le bossage d'embrayage (30) et l'élément de pression (50),
une première partie concave (C1), qui est configurée pour guider l'huile depuis le distributeur d'huile (90) jusqu'au bout du bossage (33), est formée au niveau de la surface périphérique interne (41) du bossage (33),
**caractérisé en ce que** le dispositif d'embrayage comprend en outre :
une deuxième partie concave (C2), qui est configurée pour guider l'huile depuis le distributeur d'huile (90) jusqu'à la surface de pression (60), est formée au niveau de la seconde surface périphérique externe (62) de l'élément de pression (50) pour se trouver au moins partiellement en face de la première partie concave (C1), et
une troisième partie concave (C3), qui est configurée pour guider l'huile orientée par la première partie concave (C1) et la deuxième partie concave (C2) vers au moins une plaque de frottement incluant la plaque de frottement la plus proche de la surface de pression, est formée au niveau de la surface de pression (60).

2. Dispositif d'embrayage (10) selon la revendication 1, dans lequel les différentes plaques de frottement (81, 82) incluent une pluralité de premières plaque de frottement (81) et une pluralité de secondes plaques de frottement (82) qui sont disposées alternativement pour pouvoir se déplacer dans la direction axiale (AD) entre la surface de réception de pression (40) et la surface de pression (60),
les différentes premières plaques de frottement (81) sont prévues pour ne pas pouvoir tourner par rapport au carter d'embrayage (100),
une pluralité de secondes plaques de frottement (82) parmi la pluralité de seconde plaque de frottement (82) sont prévues ne pas pouvoir tourner par rapport au bossage (33),
une seconde plaque de frottement (82) restante ou une pluralité de secondes plaques de frottement (82) restantes parmi la pluralité de secondes plaques de frottement (82) sont prévues ne pas pouvoir tourner par rapport à l'organe d'adaptation (61), et
la première partie concave (C1), la deuxième partie concave (C2) et la troisième partie concave (C3) sont configurées pour guider l'huile à partir du distributeur d'huile (90) jusqu'à au moins une première plaque de frottement (81), y compris la plaque de frottement la plus proche de la surface de pression (60) parmi la pluralité de premières plaques de frottement (81).

3. Dispositif d'embrayage (10) selon la revendication 2, dans lequel une pluralité de dents (54) sont disposées dans une zone à l'exception d'une partie située vers l'extérieur de la troisième partie concave (C3) de la surface de pression (60) de l'élément de pression (50), et
les différentes secondes plaques de frottement (82) sont en prise avec la pluralité de temps (54) pour pouvoir ne pas tourner par rapport à l'élément de pression (50).

4. Dispositif d'embrayage (10) selon la revendication 2 ou la revendication 3, dans lequel le couple d'entraînement de la première plaque de frottement la plus proche de la surface de pression (60) de l'élément de pression (50), parmi la pluralité de premières plaques de frottement (81), est supérieur au couple d'entraînement de la première plaque de frottement la plus proche de la surface de réception de pression (40) du bossage d'embrayage (30).

5. Dispositif d'embrayage (10) selon l'une quelconque des revendications 1 à 4, dans lequel un seule ou une pluralité de trous traversants (38), qui pénètrent depuis la surface périphérique interne (41) jusqu'à la première surface périphérique externe (42) du bossage (33), sont formés dans la première partie concave (C1).

6. Véhicule à selle comprenant :
une roue motrice (7),
le dispositif d'embrayage (10) conforme à l'une quelconque des revendications 1 à 5,
un moteur (5a) qui est configuré pour délivrer une force de rotation au carter embrayage (20) du dispositif d'embrayage (10), et
une transmission (5b) qui est configurée pour transmettre la force de rotation du bossage d'embrayage (30) du dispositif d'embrayage (10) à la roue motrice (7).
